(19) Europäisches Patentamt
European Patent Office
Office européen des brevets

(11) **EP 3 604 372 B1**

(12) **EUROPEAN PATENT SPECIFICATION**

(45) Date of publication and mention of the grant of the patent:
**14.12.2022 Bulletin 2022/50**

(21) Application number: **18774954.4**

(22) Date of filing: **13.03.2018**

(51) International Patent Classification (IPC):
***C08G 18/10*** (2006.01) ***C08G 18/09*** (2006.01)
***C08G 18/28*** (2006.01) ***C08G 18/40*** (2006.01)
***C09D 5/00*** (2006.01) ***C09D 175/04*** (2006.01)
***C08G 18/42*** (2006.01) ***C08G 18/79*** (2006.01)
***C09D 175/06*** (2006.01) ***C09D 175/08*** (2006.01)
***C08G 18/62*** (2006.01) ***C08G 18/12*** (2006.01)

(52) Cooperative Patent Classification (CPC):
(C-Sets available)
**C08G 18/10; C08G 18/092; C08G 18/12; C08G 18/282; C08G 18/283; C08G 18/2835; C08G 18/4277; C08G 18/6229; C08G 18/6237; C08G 18/792; C09D 5/00; C09D 175/06; C09D 175/08** (Cont.)

(86) International application number:
**PCT/JP2018/009625**

(87) International publication number:
**WO 2018/180443 (04.10.2018 Gazette 2018/40)**

(54) **POLYISOCYANATE CURING AGENT, AQUEOUS COATING COMPOSITION, COATING FILM, AND COATED ARTICLE**

POLYISOCYANATHÄRTUNGSMITTEL, WÄSSRIGE BESCHICHTUNGSZUSAMMENSETZUNG, BESCHICHTUNGSFILM UND BESCHICHTETER ARTIKEL

AGENT DE DURCISSEMENT AU POLYISOCYANATE, COMPOSITION AQUEUSE DE REVÊTEMENT, FILM DE REVÊTEMENT ET ARTICLE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2017 JP 2017069072**

(43) Date of publication of application:
**05.02.2020 Bulletin 2020/06**


(73) Proprietor: **ASAHI KASEI KABUSHIKI KAISHA**
**Tokyo 100-0006 (JP)**

(72) Inventor: **TAKENO, Kazutaka**
**Tokyo 101-8101 (JP)**

(74) Representative: **Strehl Schübel-Hopf & Partner**
**Maximilianstrasse 54**
**80538 München (DE)**



(56) References cited:
**WO-A1-2006/097318** **WO-A1-2011/001755**
**WO-A1-2014/109386** **WO-A1-2015/045635**
**WO-A1-2016/125769** **JP-A- H 021 718**
**JP-A- H0 867 732** **JP-A- S5 863 716**
**JP-A- H08 325 351** **JP-A- H09 509 198**
**JP-A- 2001 270 929** **JP-A- 2010 150 398**
**JP-A- 2014 159 508** **JP-A- 2016 516 837**
**JP-A- 2017 048 270** **US-A1- 2009 264 587**
**US-A1- 2011 306 724** **US-A1- 2016 046 848**
**US-A1- 2016 280 977**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/283;**
**C08G 18/10, C08G 18/2835;**
**C08G 18/12, C08G 18/62**

**Description**

TECHNICAL FIELD

The present invention relates to a polyisocyanate curing agent, an aqueous coating composition, a coating film and a coated article.

BACKGROUND ART

Two-pack urethane coating compositions are used in a wide variety of industrial paints, automotive paints, plastic paints and the like, which use metals, plastics, and the like base materials. In such applications, the paints are usually used at low temperatures and thus the polyisocyanate curing agents are being developed so that the coating film can be stretched even at low temperatures.

In recent years, from the viewpoint of environmental protection, a shift of the two-pack urethane coating composition used as a solvent type paint to an aqueous paint has been desired. However, in the two-pack urethane coating composition, the polyisocyanate used as a curing agent is not easily dispersed in water, but easily reacts with water to generate carbon dioxide. Therefore, development of a polyisocyanate having emulsifiability and capable of suppressing a reaction between isocyanate groups and water even in a water-dispersed state is desirable.

For example, Patent Document 1 discloses a polyurethane coating composition having extensibility. Patent Document 2 discloses a water-dispersible polyisocyanate mixture containing a reaction product of a polyisocyanate compound and a polyether containing ethylene oxide units.

PRIOR ART LITERATURE

Patent Documents

Patent document 1: Japanese Unexamined Patent Application, First Publication No. H05-222150

Patent document 2: Japanese Unexamined Patent Application, First Publication No. S61-12759

WO 2016/125769 A1 discloses a modified polyisocyanate composition obtained by reaction between a polyisocyanate and a polyalkylene glycol ether having an average number of isocyanate functional groups of 1.8 to 4.0.

US 2009/0264587 A1 discloses polyurethane solution obtained by reaction of a polyester polyol, a polyethylene glycol monomethyl ether and a polyisocyanate.

US 2011/0306724 A1 discloses a polyisocyanate composition obtained by reaction of a polyester polyol, a polyethylene glycol monomethyl ether and a polyisocyanate.

DISCLOSURE OF INVENTION

Problems to be Solved by the Invention

Aqueous industrial paints, automotive paints, and plastic paints are sometimes used at low temperatures. However, if the extensibility of the coating film is insufficient at a low temperature, there is a problem in that the coating film peels off due to the impact. For this reason, an aqueous type polyisocyanate curing agent having extensibility even at low temperature is required.

Moreover, when obtaining the coating film of an aqueous two-pack urethane coating composition, depending on the coating method, a film thickness may become large and a blister may generate occur produce and there exists a problem in that a coating-film external appearance deteriorates. Therefore, there is a need for a polyisocyanate curing agent which does not generate blisters even when a thick film is formed.

The coating composition described in Patent Document 1 is problematic from an environmental perspective because it is a solvent type. Moreover, the polyisocyanate curing agent described in Patent Document 2 has a problem in terms of extensibility at low temperature. Furthermore, Patent Document 2 does not describe the suppression of the occurrence of blisters, which is a problem unique to aqueous two-pack urethane coating compositions.

Therefore, an object of the present invention is to provide a polyisocyanate curing agent having good water dispersibility, less occurrence of blisters in a thick film, good extensibility, and excellent film elongation at low temperature, an aqueous coating composition containing the polyisocyanate curing agent, a coating film, and a coated article.

Means for Solving the Problems

The present inventors have found that a specific range of isocyanate group content obtained by the reaction of a polyisocyanate, a polyalkylene glycol alkyl ether having a specific structure, and a polyester polyol, and a polyalkylene glycol alkyl ether derived from the specific range and a polyisocyanate curing agent having a urethane polyol ratio derived from polyester polyol has good water dispersibility, less occurrence of blisters in a thick film, and good elongation and extensibility of a coating film at low temperature, thus completing the present invention.
That is, the present invention is as defined in the appended claims.

Effects of the Invention

According to the polyisocyanate curing agent of the present invention, water dispersibility is good, and it is possible to obtain a coating film with less occurrence of blisters in a thick film, good hardness, extensibility, and good film elongation at low a temperature.

BEST MODE FOR CARRYING OUT THE INVENTION

Hereinafter, embodiments for carrying out the present invention (hereinafter, referred to as "the present embodiment") will be described in detail. The following embodiments are examples describing the present invention, although the present invention is not limited to the following embodiments. The present invention may also be implemented with appropriate modifications that fall within the scope of the present invention.
In this description, "polyisocyanate" refers to a polymer in which a plurality of monomers having one or more isocyanate groups (-NCO) are bonded.
In this description, "polyol" refers to a compound having two or more hydroxy groups (-OH).
Hereinafter, embodiments for carrying out the present invention (hereinafter, referred to as "the present embodiment") will be described in detail. The following embodiments are examples describing the present invention, although the present invention is not limited to the following embodiments. The present invention may also be implemented with appropriately modifications that fall within the scope of the claims.
In this description, "polyisocyanate" refers to a polymer in which a plurality of monomers having one or more isocyanate groups (-NCO) are bonded.
In this description, "polyol" refers to a compound having two or more hydroxy groups (-OH).

<Polyisocyanate curing agent>

The polyisocyanate curing agent of the present embodiment includes a structural unit derived from at least one diisocyanate selected from the group consisting of an aliphatic diisocyanate and an alicyclic diisocyanate; a structural unit derived from a polyester polyol; and a structural unit derived from a polyalkylene glycol alkyl ether represented by the following general formula (1).
In addition, the content of the isocyanate group is 5.0 to 20.0% by mass, and a molar ratio between a urethane group derived from a polyalkylene glycol alkyl ether and a urethane group derived from the polyester polyol (mole number of urethane groups derived from polyalkylene glycol alkyl ether / mole number of urethane groups derived from polyester polyol) is 0.03 to 2.5.

[Chemical formula 2]

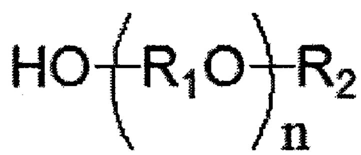

(1)

(in formula (1), $R_1$ is an alkylene group having 1 to 4 carbon atoms, $R_2$ is an alkyl group having 1 to 4 carbon atoms, and an average number of n is 4.0 to 20.0).
Hereinafter, each component constituting the polyisocyanate curing agent of the present embodiment will be explained.

<<Diisocyanate>>

The diisocyanate used in the present embodiment is at least one diisocyanate selected from an aliphatic diisocyanate and an alicyclic diisocyanate.

Examples of the aliphatic diisocyanate include, but are not limited to, 1,4-diisocyanatobutane, 1,5-diisocyanatopentane, ethyl (2,6-diisocyanato) hexanoate, 1,6-diisocyanatohexane (hereinafter also referred to as "HDI"), 1,9-diisocyanatononane, 1,12-diisocyanatododecane, and 2,2,4- or 2,4,4-trimethyl-1,6-diisocyanatohexane.

Examples of the alicyclic diisocyanate include, but are not limited to, 1,3- or 1,4-bis (isocyanatomethyl) cyclohexane (hereinafter, also referred to as "hydrogenated XDI"), 1,3- or 1,4-diisocyanatocyclohexane, 3,5,5-trimethyl 1-isocyanato-3-(isocyanatomethyl) cyclohexane (hereinafter, also referred to as "IPDI"), 4-4'-diisocyanato-dicyclohexylmethane (hereinafter, referred to as "hydrogenated MDI") and 2,5- or 2,6-diisocyanatomethyl norbornane.

Among these examples, HDI, IPDI, hydrogenated XDI, or hydrogenated MDI is more preferable because it tends to be resistant to yellowing.

«Polyester polyol»

The polyester polyol used in the present embodiment is not limited to the following, but may be a condensation polyester polyol obtained from an ethylene glycol, 1,4-butylene glycol, 1,6-hexane glycol or the like, a lactone-based polyester polyol obtained from a ring-opening polymerization of ε-caprolactone, or the like. Among them, a lactone-based polyester polyol can be suitably used from the viewpoint of improving weather resistance and water resistance.

The lactone polyester polyol can be obtained by ring-opening polymerization of ε-caprolactone with a dihydric or trihydric alcohol as an initiator in the presence of a catalyst. As the initiator, dihydric alcohols such as ethylene glycol, propylene glycol, 1,3-butylene glycol, neopentyl glycol or the like, and trihydric alcohols such as trimethylolpropane, glycerin or the like can be used. From the viewpoint of obtaining a low viscosity prepolymer, a polyhydric alcohol having a branch is preferred.

As the catalyst, organic titanium compounds such as tetrabutyl titanate, tetrapropyl titanate, tetraethyl titanate or the like, and tin compounds such as tin octylate, dibutyltin oxide, dibutyltin dilaurate, stannous chloride, stannous bromide or the like can be used. In the ring-opening polymerization of ε-caprolactone, the molar ratio between ε-caprolactone and the above-described initiator is set to a desired molecular weight under nitrogen gas atmosphere, and 0.1-1,100 ppm of a catalyst is further added to ε-caprolactone to react at a temperature of 150 to 200 °C for 4 to 10 hours.

Examples of commercially available lactone-based polyester polyols include PLACCEL 305, PLACCEL 308, PLACCEL 309, PLACCEL 312AL, PLACCEL 205, PLACCEL 212AL, PLACCEL 330AL (made by Daicel Corporation), POLYLITE OD-X-2542C, POLYLITE OD-X- 2733 (manufactured by DIC Corporation) and the like.

As the number-average molecular weight of the lactone-based polyester polyol, 500 to 1,500 is preferable, and 520 to 1,450 is more preferable. By setting the number-average molecular weight to the above-described lower limit value or less and the upper limit value or less, the extensibility of the coating film can be easily obtained, and a good compatibility with the main agent can also be obtained. In the present description, the number-average molecular weight is a value obtained by measuring the hydroxyl value of the lactone polyester polyol and using the following formula (2).

[Mathematical formula 1]

$$\text{Number average molecular} = \frac{56.11 \times N \times 1000}{\text{Hydroxyl value}} \qquad (2)$$

[In formula (2), the hydroxyl value is a value measured according to 6.4 of JIS K-1557, and N is a valence of polyhydric alcohol which is an initiator.]

• Raw material polyisocyanate

The polyisocyanate curing agent of the present embodiment can be obtained by reacting a reaction product (hereinafter, referred to as "raw material polyisocyanate") of a diisocyanate and a polyester polyol with a polyalkylene glycol alkyl ether represented by the general formula (1). The raw material polyisocyanate used in the present invention can be obtained by the following method. However, it is not limited to the following method.

The reaction temperature of diisocyanate and polyester polyol is preferably in a range of 20 to 200 °C, and more preferably in a range of 80 to 140 °C. By setting the reaction temperature within the above-described range, it is

possible not to take time to complete the reaction, and possible to suppress undesirable side reactions, and prevent the increase in viscosity of the raw material polyisocyanate and the occurrence of significant coloring of the raw material polyisocyanate. In the reaction, solvent may not be used, or any solvent inert to the isocyanate group may be used. If necessary, a catalyst may also be used to accelerate the urethanation reaction of isocyanate groups and hydroxyl groups.

At the time of reaction, it is preferable that the equivalent ratio of diisocyanate and polyester polyol be 5.0 to 40.0. By setting the equivalent ratio of diisocyanate and polyester polyol to the above-described range, it is possible to prevent high-molecular-weight formation of the raw material polyisocyanate without lowering the productivity.

After completion of the reaction, unreacted diisocyanate in the reaction mixture is recovered using, for example, a thin film evaporator or solvent extraction. The concentration of the diisocyanate contained in the raw material polyisocyanate is preferably controlled to 1.0% by mass or less, more preferably 0.7% by mass or less, by performing the above-described post-treatment. By setting the diisocyanate concentration to the upper limit value or less, the toxicity of the polyisocyanate curing agent of the present embodiment can be further reduced, and the safety can be improved.

The raw material polyisocyanate may be produced by simultaneously carrying out a reaction to obtain an isocyanurate structural unit by cyclotrimerization of three isocyanate groups using a catalyst during the reaction of the diisocyanate and the polyester polyol described above. Alternatively, the raw material polyisocyanate may be obtained by blending a polyisocyanate having an isocyanurate structural unit with the above-described reaction product of a diisocyanate and a polyester polyol.

Examples of the catalyst for obtaining an isocyanurate structure include:

1) hydroxides of tetraalkyl ammonium such as tetramethyl ammonium, tetraethyl ammonium or the like, and organic weak acid salts with, for example, acetic acid and capric acid;
2) hydroxides of hydroxyalkyl ammonium such as trimethyl hydroxypropyl ammonium, trimethyl hydroxyethyl ammonium, triethyl hydroxypropyl ammonium, triethyl hydroxyethyl ammonium or the like, organic weak acid salts with, for example, acetic acid, capric acid and the like;
3) metal salts of alkylcarboxylic acid such as acetic acid, caproic acid, octylic acid, myristic acid or the like with, for example, tin, zinc, lead, sodium, potassium and the like;
4) metal alcoholates such as sodium, potassium or the like;
5) aminosilyl group-containing compounds such as hexamethyl disilazane or the like;
6) Mannich bases;
7) combination of tertiary amines and epoxy compounds;

The catalyst described above is preferably 10 to 1,000 ppm, more preferably 10 to 500 ppm, and particularly preferably 10 to 100, with respect to the mass of the charged diisocyanate. Moreover, as for the isocyanurate reaction temperature, 50 to 120 °C is preferable.

After completion of the reaction, unreacted diisocyanate in the reaction mixture may be recovered using, for example, a thin film evaporator or solvent extraction, as described above, to control the diisocyanate concentration preferably to 1.0% by mass or less, and more preferably to 0.7% by mass or less. By setting the diisocyanate concentration to the above-described upper limit value or less, the toxicity of the polyisocyanate curing agent of the present embodiment can be further reduced, and the safety can be improved.

<<Polyalkylene glycol alkyl ether>>

The polyalkylene glycol alkyl ether used in the present embodiment has a structure represented by the following general formula (1).

[Chemical formula 3]

$$HO\left(R_1O\right)_nR_2 \qquad (1)$$

(in formula (1), $R_1$ is an alkylene group having 1 to 4 carbon atoms, $R_2$ is an alkyl group having 1 to 4 carbon atoms, and an average number of n is 4.0 to 20.0).

The polyalkylene glycol alkyl ether is not a single component, but is a collection of substances having different numbers of n, which is a degree of polymerization (hereinafter, also referred to as "polymerization degree n" or simply

"n"). Therefore, the degree of polymerization n is represented by the average value.

$R_1$ of the polyalkylene glycol alkyl ether is an alkylene group having 1 to 4 carbon atoms. When the number of carbon atoms of $R_1$ is 1 to 4, hydrophilicity can be secured, and from the viewpoint of enhancing the hydrophilicity, $R_1$ is preferably a methylene group or ethylene group, and more preferably an ethylene group.

R2 is an alkyl group having 1 to 4 carbon atoms. When the number of carbon atoms of $R_2$ is 1 to 4, hydrophilicity can be secured, and from the viewpoint of enhancing the hydrophilicity, a methyl group or an ethyl group is preferable, and a methyl group is more preferable.

Furthermore, the average number of n is 4.0 or more, preferably 4.1 or more from the viewpoints of water dispersibility, water dispersion stability, and coating film appearance.

When the average number of n is equal to or more than the above-described lower limit value, the emulsifying ability is increased, the dispersibility is improved, and the dispersion can be easily performed. Therefore, the dispersibility to a main ingredient and the appearance of a coating film are further improved.

In addition, the average number of n is 20.0 or less and preferably 18.0 or less from the viewpoints of water dispersibility and the appearance of a coating film.

When the average number of n is less than or equal to the above-described upper limit value, excessive viscosity increase such as gelation can be further prevented, and dispersion can be performed easily. Therefore, the dispersibility to a main ingredient and the appearance of a coating film are further improved.

Examples of the polyalkylene glycol alkyl ether include, but are not limited to, polyethylene glycol (mono) methyl ether, poly (ethylene, propylene) glycol (mono) methyl ether, and polyethylene glycol (mono) ethyl ether. From the viewpoint of imparting hydrophilicity, polyethylene glycol (mono) methyl ether is preferred.

The number of hydroxyl groups in the polyalkylene glycol alkyl ether is preferably 1 from the viewpoint of lowering the viscosity of the polyisocyanate curing agent.

In the polyisocyanate curing agent of the present embodiment, the modification ratio of the polyalkylene glycol alkyl ether (modification ratio) is a ratio of modified polyalkylene glycol alkyl ether with respect to 100 equivalents of the isocyanate group of the modified polyisoisocyanate. The modification ratio is preferably 1.0 to 30%, more preferably 3.0 to 25%, and particularly preferably 5.0 to 20%. When the modification ratio is at least the above-described lower limit value, the interfacial tension is lowered, and the water dispersibility tends to be exhibited. In addition, when the modification ratio is equal to or less than the upper limit value, the number of isocyanate groups used for crosslinking tends to be large, and the crosslinking property tends to be good.

Although the method for controlling the modification ratio to the above-described range is not limited to the following, for example, a method of adjusting the compounding ratio of the polyalkylene glycol alkyl ether and the raw material polyisocyanate can be mentioned. In addition, the modification ratio is measured by a method described in Examples.

With respect to the total amount (100% by mass) of the polyisocyanate curing agent, the portion derived from the polyalkylene glycol alkyl ether of the raw material polyisocyanate is preferably 10% by mass or more, and more preferably 11% by mass or more from the viewpoint of water dispersibility and water dispersion stability. When the portion derived from the polyalkylene glycol alkyl ether of the raw material polyisocyanate is at least the above-described lower limit value, a hydration layer is formed, and thus the dispersibility is improved.

Further, from the viewpoint of the retention of the isocyanate group and the physical properties of the coating film, 45% by mass or less is preferable, 40% by mass or less is more preferable, 30% by mass or less is even more preferable, and 20% by mass or less is most preferable. When the portion derived from the polyalkylene glycol alkyl ether of the raw material polyisocyanate is not more than the above-described upper limit, the contact between water and the isocyanate group is reduced, and thus the retention of the isocyanate group is high and the physical properties (hardness, resistance solvent resistance, water resistance) of the coating film is improved. The retention of the isocyanate group is measured by a method described in the examples.

Although the method for reacting the raw material polyisocyanate with the polyalkylene glycol alkyl ether is not limited to the following, for example, a method in which the terminal isocyanate group of the raw material polyisocyanate is reacted with the hydroxyl group of the polyalkylene glycol alkyl ether can be mentioned.

The isocyanate group content of the polyisocyanate curing agent of the present embodiment is 5.0 to 20.0% by mass in a state where the non-volatile content is substantially 100% by mass. The lower limit is preferably 5.2% by mass or more, and more preferably 5.5% by mass or more. The upper limit is preferably 16.0% by mass or less, and more preferably 13.5% by mass or less, even more preferably 12.0% by mass, even more preferably 11.0% by mass, and most preferably 10.5% by mass. When the isocyanate group content is at least the upper limit value and not more than the lower limit value, the number of isocyanate groups used for crosslinking increases, and the mobility of the molecule during curing of the polyisocyanate molecule is improved. As a result, the crosslinkability is improved, the physical properties of the coating film are improved, and the occurrence of blisters in a thick film tends to be improved.

Although the method for controlling the isocyanate group content to the above-described range is not limited to the following, for example, a method of adjusting the compounding ratio of the diisocyanate and the polyester polyol,

and further adjusting the compounding ratio of the polyalkylene glycol alkyl ether and the raw material polyisocyanate can be mentioned. In addition, the isocyanate group content is measured by a method described in the examples.

The polyisocyanate curing agent of the present embodiment has a molar ratio between a urethane group derived from a polyalkylene glycol alkyl ether and a urethane group derived from a polyester polyol (mole number of urethane groups derived from polyalkylene glycol alkyl ether / mole number of urethane groups derived from polyester polyol) is 0.03 to 2.5. The lower limit thereof is preferably 0.05 or more, more preferably 0.07 or more. The upper limit thereof is preferably 2.0 more, more preferably 1.6 or more, even more preferably 1.3 or less, even more preferably 1.0, and most preferably 0.8 or less. By setting the molar ratio to the above-described range, both favorable water dispersibility and extensibility can be obtained. The molar ratio is measured by a method described in the examples.

The polyisocyanate curing agent of the present embodiment has a molar ratio between the isocyanurate group and the urethane group (mole number of isocyanurate group / mole number of urethane groups) of 0.5 or less.

When the molar ratio between the isocyanurate group and the urethane group is in the above-described range, good extensibility and low-temperature elongation can be obtained. The molar ratio between the isocyanurate group and the urethane group is measured by a method described in the examples. The polyisocyanate curing agent having an isocyanurate group can be obtained by the method described above. Moreover, it may also be obtained by blending a polyisocyanate having an isocyanurate structure.

The average number of functional groups of the polyisocyanate curing agent of the present embodiment (hereinafter also referred to as "average number of isocyanate functional groups") is preferably 1.8 to 5.0. The lower limit thereof is preferably 2.0 or more, and more preferably 2.3 or more. The upper limit thereof is preferably 4.8 or less, and more preferably 4.5 or less.

When the average number of isocyanate functional groups is not less than the lower limit value and not more than the upper limit value, the movement of the molecule during curing of the polyisocyanate molecule is good. As a result, the crosslinkability of the coating film is good, the contact between water and the isocyanate group is reduced, and thus the retention of the isocyanate group is high.

Although the method of controlling average isocyanate functional group number in the above-described range is not limited to the following, for example, a method of adjusting the compounding ratio of the diisocyanate and the polyester polyol, and further adjusting the compounding ratio of the polyalkylene glycol alkyl ether and the raw material polyisocyanate can be mentioned. In addition, the average number of isocyanate functional groups is measured by a method described in the examples.

The non-volatile content of the polyisocyanate curing agent is the ratio (%) of the mass after heating to the mass before heating, and it is preferably 10% to 100%, and more preferably 50% to 100%. When the non-volatile content is at least the above-described lower limit, the amount of organic solvent used can be reduced, and environmental problems tend to be improved.

Although the method of controlling the non-volatile content to the above-described range is not limited to the following, for example, a method of adjusting the compounding ratio of the polyisocyanate curing agent and the solvent can be mentioned. The non-volatile matter is measured by a method described in the examples.

The water-dispersed number-average particle diameter when the polyisocyanate curing agent of the present embodiment is dispersed in water is preferably 30 nm or more, more preferably 40 nm or more, and particularly preferably 50 nm or more from the viewpoints of water dispersion stability and the appearance of the coating film.

When the water-dispersed number-average particle diameter is at least the above-described lower limit, the resin in the main agent is easily disposed between particles to be formed, and is easily incorporated into the particles, and thus the crosslinking is uniformly performed and the physical properties (appearance, hardness, solvent resistance, water resistance) of the coating film tend to be improved.

Further, from the viewpoints of water dispersion stability and the appearance of the coating film, the water-dispersed number-average particle diameter is preferably 1,000 nm or less, more preferably 950 nm or less, and particularly preferably 900 nm or less.

When the water-dispersed number-average particle diameter is equal to or less than the above-described upper limit, the resin in the main agent is easily disposed between particles to be formed and easily incorporated in the particles, and thus the crosslinking is uniformly performed and the physical properties (appearance, hardness, solvent resistance, water resistance) of the coating film tend to be improved.

Although the method of controlling the water-dispersed number-average particle diameter to the above-described range is not limited to the following, for example, a method of adjusting the compounding ratio of polyalkylene glycol alkyl ether and polyisocyanate can be mentioned. The water-dispersed number-average particle size is measured by a method described in the examples.

The polyisocyanate curing agent of the present embodiment may contain other components. The other components include, for example, solvents, antioxidants, light stabilizers, polymerization inhibitors, surfactants and the like.

The content of the solvent is preferably 0 to 90% by mass, and more preferably 0 to 50% by mass with respect to the total amount (100% by mass) of the polyisocyanate curing agent. It is particularly preferable that the content be

0 to 30% by mass. Although the type of the solvent is not limited to the following, ethylene glycol monobutyl ether acetate, butyl acetate, propylene glycol monomethyl ether acetate, diethylene glycol diethyl ether, dipropylene glycol dimethyl ether, butyl carbitol acetate and the like may be used alone or in combination.

The content of the antioxidant, the light stabilizer, the polymerization inhibitor, and the surfactant is preferably 0 to 10% by mass, more preferably 0 to 5.0% by mass, and particularly preferably 0 to 2.0% by mass with respect to the total amount (100% by mass) of the polyisocyanate curing agent.

Although the type of antioxidant is not limited to the following, phenolic compounds such as 2,6-di-t-butylphenol, 2,4-dimethyl-6-t-butylphenol, 2,6-di-t-butyl-p-cresol (BHT), 2,6-di-t-butyl-4-ethyl-phenol, 2,4,6-tri-t-butylphenol, 2,6-di-t-butyl-4-s-butylphenol, 2,6-di-t-butyl-4-hydroxymethylphenol, or the like; phosphoric acid ester compounds such as triphenyl phosphite, trisnonylphenyl phosphite, tricresyl phosphite, triethyl phosphite, tris (2-ethylhexyl) phosphite, tridecyl phosphite, trilauryl phosphite, tris (tridecyl) phosphite, trioleilphosphite, diphenyl mono (2-ethylhexyl) phosphite, diphenyl monodecyl phosphite, diphenyl mono (tridecyl) phosphite, trilauryl trithiophosphite, diethyl hydrogen phosphite, bis (2-ethylhexyl) hydrogen phosphite, dilauryl hydrogen phosphite, dilauryl hydrogen phosphite, dioleyl hydrogen phosphite, diphenyl hydrogen phosphite, tetraphenyl dipropylene glycol diphosphite, tetra (C12-C15 alkyl) 4,4 isopropylidene diphenyl diphosphite, bis (decyl) pentaerythritol diphosphite, bis (tridecyl) pentaerythritol diphosphite, tristearyl phosphite, distearyl pentaerythritol diphosphite, tris (2,4-di-t-butylphenyl) phosphite, SUMILIZER-GP (manufactured by Sumitomo Chemical Co., Ltd), ADK STAB HP10, ADK STAB PEP-8, ADK STAB PEP-36/36A (manufactured by ADEKA Corporation), or the like can be mentioned.

It is preferable to include a UV absorber and/or a light stabilizer in the aqueous coating composition in order to impart high weatherability. It is preferable to use a UV absorber and a light stabilizer in combination, because a coating film obtained by curing an aqueous coating composition is particularly excellent in weather resistance. The UV absorber and/or the light stabilizer is preferably used in an amount of 0.1 to 5% by mass with respect to the resin content of the aqueous polyol.

Although the type of light stabilizer is not limited to the following, for example, UV absorbers based on benzotriazole such as 2- (2'-hydroxy-5'-methylphenyl) benzotriazole, 2-(2'-hydroxy-5'-tert-butylphenyl) benzotriazole, 2-(2'-hydroxy-3',5'-di-tert-butylphenyl) benzotriazole, 2-(2-hydroxy-5-tert-octylphenyl) benzotriazole, 2- (2-hydroxy-3,5-di-tert-octylphenyl) benzotriazole, 2-[2'-hydroxy-3',5'-bis ($\alpha$,$\alpha$'-dimethylbenzyl) phenyl] benzotriazole), condensate of methyl-3-[3-tert-butyl-5-(2H-benzotriazol-2-yl)-4-hydroxyphenyl] propionate and polyethylene glycol (molecular weight 300) (manufactured by BASF, product name: TINUVIN 1130 ), isooctyl-3-[3-(2H-benzotriazol-2-yl)-5-tert-butyl-4-hydroxyphenyl] propionate (manufactured by BASF, product name: TINUVIN 384), 2-(3-dodecyl-5-methyl-2-hydroxyphenyl) benzotriazole (manufactured by BASF, product name: TINUVIN 571), 2-(2'-hydroxy-3'-tert-butyl-5'-methylphenyl)-5-chlorobenzotriazole, 2-(2'-hydroxy-3',5'-di-tert-amylphenyl) benzotriazole, 2-(2'-hydroxy-4'-octoxyphenyl) benzotriazole, 2-[2'-hydroxy-3'-(3",4",5",6"-tetrahydrophthalimidomethyl)-5'-methylphenyl] benzotriazole, 2,2-methylenebis [4-(1,1,3,3-tetramethylbutyl) -6- (2H-benzotriazol-2-yl) phenol], 2- (2H-benzotriazol-2-yl) -4,6-bis (1-methyl-1-phenylethyl) phenol (manufactured by BASF, product name: TINUVIN 900), or the like; triazine-based UV absorbers such as TINUVIN 400 (product name, manufactured by BASF), or the like; hindered amine light stabilizers such as bis (2,2,6,6-tetramethyl-4-piperidyl) succinate, bis (2,2,6,6-tetramethyl piperidyl) sebacate, bis (1,2,2,6,6-pentamethyl-4-piperidyl) 2-(3,5-di-tert-butyl-4-hydroxybenzyl) -2-butyl malonate, 1- [2- [3-(3,5-di-tert-butyl-4-hydroxyphenyl) propynyloxy] ethyl] -4- [3-(3,5-di-tert-butyl-4-hydroxyphenyl) ) Propynyloxy] -2,2,6,6-tetramethylpiperidine, mixture of bis (1,2,2,6,6-pentamethyl-4-piperidyl) sebacate and methyl-1,2,2,6,6-pentamethyl-4-piperidyl-sebacate (BASF product name: TINUVIN 292), bis (1-octoxy-2,2,6,6-tetramethyl-4-piperidyl) sebacate, TINUVIN 123 (product name, manufactured by BASF), or the like; can be mentioned.

Although the type of the surfactant is not limited to the following, for example, anionic surfactants such as ammonium (C1-C20 alkyl) benzenesulfonate, sodium (C1-C20 alkyl) disulfate, sodium alkyldiphenylether disulfonate, sodium di(C1-C20 alkyl) sulfosuccinate, sodium polyoxyethylene C6-C30 arylether sulfonate, ammonium polyoxyethylene C6-C30 arylether sulfonate and the like can be mentioned.

<Aqueous coating composition>

The aqueous coating composition of the present embodiment comprises the polyisocyanate curing agent of the present embodiment described above and an aqueous polyol.

Although the aqueous polyol used in the aqueous coating composition of the present embodiment is not limited to the following, aqueous polyols dispersed or emulsified in a medium containing water as a main component and optionally containing a small amount of an organic solvent can be mentioned. The design of the composition of the aqueous polyol, the glass transition temperature, the particle size, the molecular weight, the hydroxyl group concentration and the like vary depending on the application and purpose, and many products are commercially available. With respect to the composition, acrylic type, polyester type, polyurethane type and the like can be used. In some cases, a combination of them can also be used.

The glass transition temperature of the aqueous polyol varies depending on the application and purpose of the cured resin composition, and is not limited. Generally, it is set to a low value in applications that require flexibility, such as elastic coatings, and is set to a high value in applications that require hardness, such as hard coatings, but is usually around -50 °C to 80 °C.

The particle diameter of the aqueous polyol is usually set to about 50 to 400 nm as an average particle diameter from the viewpoints of dispersion stability, viscosity and various properties of the formed coating film.

Although the hydroxyl group concentration of the aqueous polyol can be appropriately set depending on the application and purpose, the weight% of the hydroxyl groups in the polyol is usually about 0.5 to 5%.

Acrylic polyols are obtained by copolymerizing a single or a mixture of ethylenically unsaturated bond-containing monomers having a hydroxyl group with a single or a mixture of other ethylenically unsaturated bond-containing monomers copolymerizable therewith. The polymerization is carried out by general solution polymerization or emulsion polymerization, and chain transfer agents such as mercaptans or the like are used to control molecular weight. In the case of emulsion polymerization, a polyol emulsified in water can be directly obtained. However, in the case of solution polymerization, it is preferable to copolymerize a carboxyl group-containing monomer in an amount necessary for aqueous dispersion to be performed after the polymerization. After completion of the polymerization, the carboxyl group is neutralized with a basic compound such as ammonia or amine, and water is added to obtain an aqueous dispersion of the polyol. The organic solvent used during the solution polymerization is preferably removed thereafter by distillation. Examples of the ethylenically unsaturated bond-containing monomer having a hydroxyl group include a 2-hydroxyethyl acrylate, 3-hydroxypropyl acrylate, 4-hydroxybutyl acrylate, 2-hydroxyethyl methacrylate, 3-hydroxypropyl methacrylate, 4-hydroxybutyl methacrylate and the like. Preferred examples are 2-hydroxyethyl acrylate and 2-hydroxyethyl methacrylate. Examples of other ethylenically unsaturated bond-containing monomers copolymerizable with the above-described monomers include acrylic esters such as an ethyl acrylate, propyl acrylate, isopropyl acrylate, acrylic acid-n-butyl, isobutyl acrylate, acrylic acid-n-hexyl, acrylic acid cyclohexyl, 2-ethylhexyl acrylate, lauryl acrylate, or the like; methacrylates such as an methyl methacrylate, ethyl methacrylate, propyl methacrylate, isopropyl methacrylate, methacrylic acid-n-butyl, isobutyl methacrylate, methacrylic acid-n-hexyl, cyclohexyl methacrylate, 2-ethylhexyl methacrylate, lauryl methacrylate, or the like; unsaturated carboxylic acids such as an acrylic acid, methacrylic acid, maleic acid, itaconic acid, or the like; unsaturated amides such as an acrylamide, methacrylamide, N, N-methylenebisacrylamide, diacetone acrylamide, or the like; glycidyl group-containing monomers such as a glycidyl methacrylate or the like; vinyl monomers such as a styrene, vinyl toluene, vinyl acetate, acrylonitrile, dibutyl fumarate or the like; hydrolyzable silyl group-containing monomers such as a vinyltrimethoxysilane, vinylmethyldimethoxysilane, γ- (meth) acryloxypropyltrimethoxysilane, or the like; and the like. Commercially available aqueous acrylic polyols include Setaqua 6510, Setaqua 6511, Setaqua 6515, Setaqua 6516, Setaqua 6520, Setaqua 6522 (manufactured by Nuplex Resins Limited), Macrynal VSM2521w, Macrynal VSM6299w, Macrynal SM6810, Macrynal SM6825, Macrynal SM6826w (manufactured by Allnex Belgium SA/NV) and the like.

The polyester-based polyol can be obtained by a condensation reaction of a single or mixture of dibasic acids selected from carboxylic acids such as succinic acid, adipic acid, sebacic acid, dimer acid, maleic anhydride, phthalic anhydride, isophthalic acid, terephthalic acid, if necessary sulfonate-containing polycarboxylic acid, with a single or mixture of polyhydric alcohols selected from ethylene glycol, propylene glycol, butylene glycol, hexylene glycol, diethylene glycol, neopentyl glycol, trimethylolpropane, pentaerythritol, glycerin and the like; or by a ring-opening polymerization of ε-caprolactone a using polyhydric alcohol. The molecular weight can be controlled by controlling the degree of polymerization. After completion of the polymerization, the carboxyl group in the polyol is neutralized with a basic compound such as ammonia or amine, and water is added to obtain an aqueous polyol. When an organic solvent is used in polymerization or water dispersion, preferably the organic solvent is dispersed by distillation after water dispersion.

As polyurethane-based polyols, those generally referred to as polyurethane dispersions may be used, and can be obtained by carrying out a polymerization reaction in which a diisocyanate compound such as isophorone diisocyanate, hexamethylene diisocyanate, methylene diphenyl diisocyanate, hydrogenated methylene diphenyl diisocyanate or the like reacts with a polyester diol, polycarbonate diol or the like in the presence of a carboxyl group-containing zeal such as dimethylol propionic acid in a required amount, neutralizing the carboxyl group with a teriary amine or the like, followed by dispersing the resulting material by adding water, and then rapidly adding a diamine compound such as ethylene diamine and isophorone diamine or the like to perform chain elongation. The molecular weight can be controlled by the ratio of isocyanate group to hydroxyl group in the prepolymerization reaction or the conditions of chain elongation. When an organic solvent is used in the prepolymerization reaction, the organic solvent is preferably removed by distillation after chain extension. In addition, since the polyurethane dispersion itself is a tough polyol, as the main component for the aqueous two-pack curable resin in the present embodiment, in addition to those in which a predetermined amount of hydroxyl group is introduced, those having no hydroxyl group or having a small hydroxyl group content even in the case of having it can be used.

These aqueous polyols are preferably emulsified, dispersed or dissolved in water. Therefore, the carboxyl group, sulfone group or the like contained in the aqueous polyol can be neutralized.

Although the neutralizing agent for neutralizing the carboxyl group, sulfone group or the like is not limited to the following, for example, ammonia or at least one water-soluble amino compound selected from the group consisting of monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylene diamine, propylene diamine, methyl ethanolamine, dimethyl ethanolamine, diethyl ethanolamine and morpholine, can be used. As the neutralizing agent, tertiary amines such as triethylamine and dimethylethanolamine are preferred.

The aqueous coating composition of the present embodiment may include, in addition to the polyisocyanate curing agent of the present embodiment described above and the aqueous polyol, those generally added to a coating composition such as a thickener, surface tension modifier, defoamer, inorganic pigments, organic pigment, extender pigment, silane coupling agent, titanium coupling agent, anti-corrosion pigment, freeze stabilizer, matting agent, crosslinking reaction catalyst, anti-skinning agent, dispersant, filler, plasticizer, lubricant, reducing agent, preservative, antifungal agent, deodorant, anti-yellowing agent, UV absorber, light stabilizer, antistatic agent or charge control agent, antisettling agent.

Although the thickener is not limited to the following, for example, an acrylic thickener, an acrylic associative thickener, a polyurethane thickener and the like may be used. Examples of the acrylic thickener include Viscoatex 46, Viscoatex 730, Thixol 53L (manufactured by ARKEMA K.K.). Examples of the acrylic associative thickener include Rheotech 2000, Rheotech 2800, Rheotech 3800, Rheotech 4800 (manufactured by ARKEMA K.K.). Examples of the polyurethane associative thickener include Coapur 6050, Coapur 975 W, Coapur 830 W, Coapur 3025, Coapur 2025, Coapur SX71, Coapur SX22 (made by ARKEMA K.K.), BYK-420, BYK-425, BYK-428 (manufactured by BYK Additives & Instruments) or the like can be used. These may be used alone or in combination of two or more.

Although the surface tension regulator is not limited to the following, for example, silicon-based or acrylic-based or the like may be used. Examples of the silicon-based surface tension regulator include BYK-302, BYK-307, BYK-325, BYK-331, BYK-333, BYK-342, BYK-346, BYK-347, BYK-348, BYK-349, BYK-378, BYK-3455 (manufactured by BYK Additives & Instruments), Tego wet KL245, Tego wet 250, Tego wet 260, Tego wet 265, Tego wet 270, and Tego wet 280 (manufactured by Evonic Tego Chemie GmbH). Examples of the acrylic-based surface tension regulator include BYK-381, BYK-3441 (manufactured by BYK Additives & Instruments) and the like. These may be used alone or in combination of two or more.

Although the defoamer it is not limited to the following, for example, BYK-011, BYK-012, BYK-014, BYK-015, BYK-017, BYK-018, BYK-019, BYK-021, BYK- 022, BYK-023, BYK-024, BYK-025, BYK-028, BYK-038, BYK-044, BYK-093, BYK-094, BYK-1610, BYK-1615, BYK-1650, BYK-1710, BYK-1711, BYK-1730, BYK-1740, BYK-1770, BYK-1780, BYK-1785, BYK-1798 (manufactured by BYK Additives & Instruments) and the like may be used.

In the aqueous coating composition of the present embodiment, taking the reaction between the isocyanate group and water into consideration, the ratio of isocyanate group to hydroxyl group is preferably set to a condition in which the isocyanate group is in excess. Usually, the molar ratio of isocyanate group to hydroxyl group is set to 1.1 to 1.5 times.

The aqueous coating composition of the present embodiment may be used for coating materials for buildings, coating materials for wood-workings, coating materials for automobiles, coating materials for automobile repair, coating materials for plastic, soft feeling coating materials, pressure-sensitive adhesives, adhesives, building materials, household aqueous coating materials, other coating agents, sealing agents, ink, casting materials, elastomers, forms, plastic raw materials, and fiber treatment agents.

<Coating film and coated article>

The coating film and the coated material of the present embodiment can be obtained by curing the above-described aqueous coating composition on a substrate.

The coating film and the coated material of the present embodiment can be obtained by applying the aqueous coating composition to the substrate by a general method such as spray coating, roller coating, curtain flow coating, air knife coating, gravure coating, brush coating and the like to form a coating film. Drying of the aqueous coating composition applied to the substrate may be carried out by natural drying, or heat drying may be carried out by warm air, infrared radiation or the like.

Although the substrate used for the coating film and the coated material of the present embodiment is not limited to the following, for example, metals such as mild steel, SUS, aluminum or the like, wood such as beech veneer, glass, stone, ceramic material, concrete, hard and flexible plastics, plastics such as polycarbonate or ABS, textiles, leather products, paper may be mentioned. Optionally, a conventional primer may be applied prior to applying the aqueous coating composition.

[Examples]

The present embodiment is described below in further detail using a series of examples and comparative examples, but the present embodiment is in no way limited by the following examples and comparative examples provided they remain within the scope of the present invention. The physical properties of the polyisocyanate curing agents in Examples and Comparative Examples were measured in the manner described below. Unless specifically stated otherwise, "parts" and "%" mean "parts by mass" and "% by mass" respectively.

<Isocyanate group content>

Each of the polyisocyanate curing agents was used as a sample, and the isocyanate group content was measured according to the method described in JIS K 7301-1995 (Testing method for tolylene diisocyanate type prepolymer for thermosetting urethane elastomer). The method for measuring isocyanate group content will be more specifically described below.

(1) 1 g of the sample was collected in a 200 mL conical flask, and 20 mL of toluene was added into the flask to dissolve the sample.
(2) Thereafter, 20 mL of a 2.0 N di-n-butylamine-toluene solution was added into the flask, and then the flask was allowed to stand for 15 minutes.
(3) 70 mL of 2-propanol was added into the flask and dissolved to obtain a solution.
(4) The solution obtained in the above (3) was titrated with 1 mol/L hydrochloric acid to determine the titration amount of the sample.
(5) A blank titration amount was obtained by carrying out the above-described steps (1) to (3) without adding the sample.

From the sample titration amount and the blank titration amount obtained above, the isocyanate group content was calculated by the following calculation method.

$$\text{Isocyanate group content (\% by mass)} = (\text{blank titration amount} - \text{sample titration amount}) \times 42 / [\text{mass of sample (g)} \times 1{,}000] \times 100\%$$

<Viscosity>

The viscosity was measured at 25 °C using an E-type viscometer (manufactured by Tokimec Inc.). A standard rotor (1°34' × R24) was used for the measurement. The rotational rate was set as follows.

100 rpm (in the case of viscosity less than 128 mPa·s)
50 rpm (in the case of viscosity from 128 mPa·s to 256 mPa·s)
20 rpm (in the case of viscosity from 256 mPa·s to 640 mPa·s)
10 rpm (in the case of viscosity from 640 mPa·s to 1,280 mPa·s)
5 rpm (in the case of viscosity from 1,280 mPa·s to 2,560 mPa·s)

<Molar ratio of isocyanurate group / urethane group, urethane group derived from polyalkylene glycol alkyl ether / urethane group derived from polyester polyol>

Avance 600 (trade name) manufactured by Bruker Biospin corporation was used.

The molar ratio of isocyanurate group / urethane group was determined by 13C-NMR and 1H-NMR measurement. The signal of the isocyanurate group was confirmed by 13C-NMR, and when there was a signal, it was calculated from the ratio between the isocyanurate group and the urethane group in 1H-NMR. When there was no signal of isocyanurate group in 13 C-NMR, it was set to 0.

The molar ratio of urethane group derived from polyalkylene glycol alkyl ether / urethane group derived from polyester polyol was determined by 13C-NMR measurement and 1H-NMR measurement. In addition, the urethane group derived from the polyalkylene glycol alkyl ether was calculated according to the following procedure because the signal overlaps with a burette group. The ratio of the burette group to urethane group was determined from the 1H-NMR signal.

From the 13C-NMR signal, the total value of integral values per one carbon of the urethane group derived from polyester polyol, urethane group derived from polyalkylene glycol alkyl ether, and burette group was determined. The total value was multiplied by the ratio of the burette group to the urethane group determined from 1H-NMR to determine the integral value per one carbon of the burette group and the urethane group in 13C-NMR. The integral value per carbon of the urethane group derived from the polyester polyol is subtracted from the integral value per carbon of the urethane group in 13C-NMR calculated from the ratio to calculate the urethane group derived from polyalkylene glycol alkyl ether, and the molar ratio of urethane group derived from polyalkylene glycol alkyl ether / urethane group derived from polyester polyol was calculated.

The specific measurement conditions are as follows.

[13C-NMR]

Device: AVANCE 600 (manufactured by Bruker Biospin Corporation)
Cryoprobe: CP DUL 600S3 C / H-D-05 Z (manufactured by Bruker Biospin Corporation)
Resonance frequency: 150 MHz
Concentration: 60 wt/vol%
Shift standard: $CDCl_3$ (77 ppm)
Number of integrations: 10,000 times
Pulse program: zgpg30 (Proton complete decoupling method, waiting time 2 seconds)

In addition, in the above-described measurement, the integral value of the following signals was divided by the number of carbons being measured, and each molar ratio was determined from the obtained value.

Isocyanurate group: around 148.5 ppm: integral value ÷ 3
Allophanate group: around 153.9 ppm: integral value ÷ 1
Urethane group derived from polyalkylene glycol alkyl ether+ burette group: around 155.9 ppm
Urethane group derived from polyester polyol: around 156.3 ppm: integral value ÷ 1

[1H-NMR]

Device: AVANCE 600 (manufactured by Bruker Biospin Corporation)
Cryoprobe: CP DUL 600S3 C / H-D-05 Z (manufactured by Bruker Biospin Corporation)
Resonance frequency: 600 MHz
Concentration: 5 wt/vol%
Shift standard: $CHCl_3$ (7.26 ppm)
Integration count: 256 times
Pulse program: zg30 (1 second wait time)

In addition, in the above-described measurement, the integral value of the following signals was divided by the number of hydrogens being measured, and each molar ratio was calculated from the obtained value.

Isocyanurate group: around 3.8 ppm: integral value ÷ 6
Bullet base: around 7.2 ppm: integral value ÷ 2
Urethane group: around 4.8 ppm: integral value ÷ 1

<Unreacted diisocyanate concentration>

A 20 mL-sample bottle was placed on a digital balance and about 1 g of the raw material polyisocyanate was precisely weighed. Next, 0.03 to 0.04 g of nitrobenzene (internal standard solution) was added and precisely weighed. Further, about 9 mL of ethyl acetate was added, the lid was tightly closed, and the sample was mixed well. The prepared solution was analyzed by gas chromatography under the following conditions and quantified.

Device: SHIMADZU Corporation GC-8A
Column: Shinwa Chemical Co., Ltd. Silicone OV-17

Column oven temperature: 120 °C
Injection / detector temperature: 160 °C

<Appearance of raw material polyisocyanate >

The appearance of the raw material polyisocyanate produced by the following procedure was visually evaluated, and was judged as "transparent", "slightly cloudy", and "cloudy". It is preferably "transparent" or "slightly cloudy", and most preferably "transparent".

[Production Example 1] Production of Raw material polyisocyanate A-1

The inside of a four-necked flask equipped with a stirrer, thermometer, reflux condenser, nitrogen blow-in pipe and a dropping funnel was replaced with nitrogen, and 792.4 g of hexamethylene diisocyanate and 115.3 g of Plaxel 305 (polycaprolactone polyol, manufactured by Daicel, number-average molecular weight of 550, hydroxyl value of 305 mg KOH/g, described as "305" in Table 1 below) were charged and reacted at 100 °C for 1 hour while stirring.

The resulting reaction solution was filtered using a PTFE filter with a pore size of 3 μm (trade name: T300A090C, manufactured by ADVANTEC CO., LTD). Using a thin film evaporator, purification was carried out twice at 160 °C and 0.2 Torr to remove the unreacted hexamethylene diisocyanate, thereby the raw material polyisocyanate A-1 was obtained. The obtained raw material polyisocyanate A-1 had an isocyanate group content of 11.7% by mass and a viscosity of 4,800 mPa·s at 25 °C.

[Preparation Examples 2 to 5, 7, 8] Preparation of raw material polyisocyanates A-2 to A-5, A-7, A-8

The raw material polyisocyanates were produced by the method similar to Production Example 1 except that various polyester polyols having different number-average molecular weight values and hexamethylene diisocyanate were reacted with the compositions shown in Table 1. The raw material polyisocyanates A-2 to A-5 and A-7 to A-8 obtained had isocyanate group content and viscosity as shown in Table 1.

[Preparation Example 6] Preparation of raw material polyisocyanate A-6

A four-necked flask equipped with a stirrer, thermometer, reflux condenser, nitrogen blow-in tube and a dropping funnel was made into a nitrogen atmosphere, and 1,000 g of hexamethylene diisocyanate and 1.8 g of isobutanol were charged and kept for 2 hours with a temperature inside the reactor of 80 °C while stirring. Thereafter, 0.1 g of a solution in which an isocyanuration-forming catalyst of trimethyl-2-methyl-2-hydroxyethylammonium hydroxide was diluted to 5.0% by mass with isobutanol was added, and isocyanuration reaction was carried out, and then when the addition ratio of the reaction solution reached 40%, phosphoric acid was added to stop the reaction. The resulting reaction solution was filtered using a PTFE filter with a pore size of 3 μm (trade name: T300A090C, manufactured by ADVANTEC CO., LTD). Using a thin film evaporator, purification was carried out twice at 160 °C and 0.2 Torr to remove the unreacted hexamethylene diisocyanate, thereby obtaining raw material polyisocyanate A-6. The obtained raw material polyisocyanate A-6 had an isocyanate group content of 21.1% by mass and a viscosity at 25 °C of 2,600 mPa·s.

[Table 1]

| | | | Unit | Production Example 1 | Production Example 2 | Production Example 3 | Production Example 4 | Production Example 5 | Production Example 6 | Production Example 7 | Production Example 8 |
|---|---|---|---|---|---|---|---|---|---|---|---|
| Raw material polyisocyanate | | | | A-1 | A-2 | A-3 | A-4 | A-5 | A-6 | A-7 | A-8 |
| composition | HDI Amount | | g | 792.4 | 889.4 | 431.2 | 600.8 | 215.2 | 1,000 | 1,512 | 609.5 |
| | Polyester Polyol | Type | | 305 | 308 | 312AL | 205 | 330AL | — | 303 | 305 |
| | | Amount | g | 115.3 | 200 | 142.6 | 119.6 | 170.8 | — | 120 | 266.1 |
| Appearance | Appearance of Polyisocyanate Raw Material | | | Transparent | Transparent | Transparent | Slightly cloudy | Transparent | Transparent | Slightly cloudy | Transparent |
| Physical Property | Unreacted Diisocyanate Concentration | | % | < 0.1 | < 0.1 | 0.1 | 0.1 | < 0.1 | < 0.1 | < 0.1 | < 0.1 |
| | Viscosity | | mPa·s | 4,800 | 4,900 | 10,000 | 1,400 | 25,000 | 2,600 | 7,700 | 12,000 |
| | Isocyanate Group Content | | % | 11.7 | 9.2 | 7.5 | 9.9 | 4.3 | 21.7 | 14.7 | 8.1 |

In Table 1, each polyester polyol means the following materials.

- 305: Plaxel 305 (polycaprolactone polyol, manufactured by Daicel Corporation, number-average molecular weight 550, hydroxyl value 305 mg KOH/g)
- 308: Plaxel 308 (polycaprolactone polyol, manufactured by Daicel Corporation, number-average molecular weight 850, hydroxyl value 195 mg KOH/g)
- 312 AL: Plaxel 312 AL (polycaprolactone polyol, made by Daicel Corporation, number-average molecular weight 1,250, hydroxyl value 137 mg KOH/g)
- Plaxel 205: Plaxel 205 (polycaprolactone polyol, manufactured by Daicel Corporation, number-average molecular weight 550, hydroxyl value 205 mg KOH/g)
- 330 AL: Plaxel 330 AL (polycaprolactone polyol, manufactured by Daicel Corporation, number-average molecular weight 3,000, hydroxyl value 55 mg KOH/g)
- 303: Plaxel 303 (polycaprolactone polyol, manufactured by Daicel Corporation, number-average molecular weight 350, hydroxyl value 540 mg KOH/g)

[Production Example 9] (Production of aqueous polyol)

As a reactor, a four-neck separable flask equipped with a stirrer, thermometer, reflux condenser, nitrogen blow-in pipe and a dropping funnel was used. 675 g of water and 4.3 g of Emanol NC (anionic surfactant, 35% aqueous solution, manufactured by Kao Corporation) were added and heated to 80 °C, followed by adding 8 g of ammonium persulfate (2% aqueous solution) as an initiator. Next, the following mixture was dropped into the flask over 4 hours, and kept at 80 °C for 1 hour after the addition was completed.

| | |
|---|---|
| 2-Hydroxymethyl methacrylate | 25 g (3.5% by mass) |
| Acrylic acid | 10 g (1.4% by mass) |
| Acryl amide | 2 g (0.3% by mass) |
| Glycidyl methacrylate | 27 g (3.8% by mass) |
| Methyl methacrylate | 353 g (49.0% by mass) |
| Butyl acrylate | 293 g (40.7% by mass) |
| Styrene | 9 g (1.3% by mass) |
| Water | 400 g |
| Ammonium persulfate (2% aqueous solution) | 31 g |
| Eleminol JS-2 (Note 1) | 38g |
| Emulgen 920 (Note 2) | 9g |

(Note 1) Reactive emulsifier, 39% aqueous solution, Sanyo Chemical Industries, Ltd.
(Note 2) Nonion surfactant, 25% aqueous solution, Kao Corporation

The obtained aqueous polyol was milky white and a stable dispersion having a nonvolatile content of 38% and a particle size of 100 nm. The hydroxyl value was 15.0 mg KOH/g, the acid value was 10.8 mg KOH/g, and the glass transition temperature was 15.7 °C, which were obtained from the calculation.

<Water dispersibility>

The water dispersibility of the obtained polyisocyanate curing agent was evaluated as follows.

(1) Mass of a 100 mL flask and Yoshino Paper was measured.
(2) A polyisocyanate curing agent was collected in the 100 mL flask so as to be 16 g in terms of solid content, and 24 g of deionized water was added.
(3) A propeller blade was used to stir the solution in the 100 mL flask at 200 rpm for 3 minutes, and then filtered with the Yoshino paper weighed in (1).
(4) The filtration residue left on Yoshino Paper and the residue left in the 100 mL flask were combined and heated in a dryer at 105 °C for 1 hour to determine the mass (g).
(5) The proportion of the polyisocyanate curing agent dispersed in water was determined by the following calculation method.

Percentage dispersed in water (% by mass) = 100% − (total mass (g) of 100 mL flask containing the residue and Yoshino Paper determined in (4) - total mass (g) of 100 mL flask and Yoshino Paper measured in (1) / (mass (g) of polyisocyanate curing agent collected in (2) × nonvolatile content (% by mass)) × 100%

The evaluation method is as follows.

◎: 70% by mass or more
◦: 50% by mass or more and less than 70% by mass
x: less than 50% by mass

[Preparation of aqueous coating composition C]

40 g of the aqueous polyol produced in Production Example 9 was weighed and put into a container, and a polyisocyanate curing agent was added such that the molar ratio of isocyanate groups in the polyisocyanate curing agent to hydroxyl groups in the aqueous polyol aqueous dispersion was NCO/OH = 1.25, while stirring at 1,000 rpm using a dispersion blade. Furthermore, deionized water was added to the above-described mixture so that the solid content of the aqueous coating composition was 38% by mass, and the mixture was stirred for 5 minutes to produce an aqueous coating composition C.

<Elongation of coating film at low temperature>

The above-described aqueous coating composition C was coated on a PP plate so that the coating film had a thickness of 40 μm, and dried under an atmosphere of 23 °C/50% RH for 7 days. The elongation at break of the resulting coating film was evaluated under the following conditions.

Device: TENSILON RTE-1210 (manufactured by A&D Company, Limited)
Tension speed: 20 mm/min
Chuck distance: 20 mm
Sample width: 10 mm
Measurement temperature: 5 °C

Evaluation criteria are as follows. In addition, when an aqueous coating composition was not obtained, it was evaluated as "impossible to evaluate".

◎: 30% or more
◦: 25% or more and less than 30%
Δ: 20% or more and less than 25%
Δ×: 15% or more and less than 20%
x: less than 15%

<Extensibility>

The above-described aqueous coating composition C was coated on PP plate so that the obtained coating film had a thickness of 40 μm, and dried under an atmosphere of 23 °C/50% RH for 7 days. The elongation at break of the resulting coating film was evaluated under the following conditions.

Device: TENSILON RTE-1210 (manufactured by A&D Company, Limited)
Tension speed: 20 mm/min
Chuck distance: 20 mm
Sample width: 10 mm
Measurement temperature: 23 °C

Evaluation criteria are as follows. In addition, when an aqueous coating composition was not obtained, it was evaluated as "impossible to evaluate".

◎: 90% or more
◦: 80% or more and less than 90%
Δ: 70% or more and less than 80%
Δ×: 60% or more and less than 70%
x: less than 60%

<Hardness of coating film>

The above-described aqueous coating composition C was coated on a glass plate so that the obtained coating film had a thickness of 40 μm, and dried under an atmosphere of 23 °C/50% RH for 7 days. The obtained coating film was measured using a Konig hardness tester (manufactured by BYK Gardner, trade name "Pendulum hardness tester"). The evaluation method is as follows. The evaluation results are shown in Table 3. In addition, when an aqueous coating composition was not obtained, it was evaluated as "impossible to evaluate".

◎: 40 or more
◦: 15 to 39
Δ: 10 to 14
Δ×: 7 to 9
x: 6 or less

<Blister evaluation>

62.23 g of aqueous polyol Setaqua 6515 (OH content: 3.3%, non-volatile content: 45%, manufactured by Nuplex Resin Co., Ltd.) was weighed and put in a container, and while stirring, 0.10 g of the leveling agent BYK-348 (manufactured by BYK), 0.10 g of Tego Wet 270 (manufactured by Evonic Tego Chemie), 0.65 g of UV absorber Tinuvin 1130 (manufactured by BASF), 0.32 g of light stabilizer Tinuvin 292 (manufactured by BASF) and 4.51 g of water were added, followed by stirring for 5 minutes. A polyisocyanate curing agent was added so that the molar ratio of the isocyanate group in the polyisocyanate curing agent and the hydroxyl group of the aqueous polyol Setaqua 6,515 was NCO/OH = 1.5, followed by stirring for 10 minutes to obtain aqueous coating composition D. The aqueous coating composition D was defoamed under the conditions of 1,500 rpm, 50 Torr and 3 minutes using a vacuum defoaming apparatus. The defoamed aqueous coating composition D was applied on a glass plate so that the obtained coating film had a thickness of 140 μm, and dried for 7 days under an atmosphere of 23 °C/50% RH. The number of blisters generated on the appearance of 5 cm x 5 cm of the obtained coating film was counted and evaluated by the following evaluation criteria. In addition, when an aqueous coating composition was not obtained, it was evaluated as "impossible to evaluate".

◎: 0 to 1 blister
◦: 2 to 3 blisters
Δ: 4 to 6 blisters
Δ×: 7 to 8 blisters
×: 9 or more blisters

[Example 1]

A four-necked flask equipped with a stirrer, thermometer, reflux condenser, nitrogen blow-in pipe and a dropping funnel was made into a nitrogen atmosphere, and 17.9 g of TN-555 (polyethylene glycol monomethyl ether, manufactured by Nippon Nyukazai Co., Ltd.) was charged to 100 g of raw material polyisocyanate A-1, and kept for 3 hours with a reactor internal temperature of 120 °C while stirring. The resulting reaction solution was cooled to obtain a polyisocyanate curing agent B-1. Physical properties of the obtained polyisocyanate curing agent B-1 are described in Table 2. The water dispersibility of the obtained polyisocyanate curing agent B-1 was evaluated, and the results are shown in Table 2. Moreover, the aqueous coating composition C was prepared, and the coating film elongation at low temperature, the extensibility, and the coating film hardness were measured. The measurement results are shown in Table 2. Aqueous coating composition D was prepared separately, and a blister evaluation was performed. The results are shown in Table 2.

[Examples 2 to 15, Comparative Examples 1 to 5] (Examples 13 and 15 for reference)

A polyisocyanate curing agent was obtained by the same procedure as in Example 1 except for the conditions described in Table 2 or Table 3. Physical properties of the obtained polyisocyanate curing agent are described in Table 2 or Table 3. The water dispersibility of the obtained polyisocyanate curing agent was evaluated, and the results are shown in Table 2 or Table 3. Moreover, the aqueous coating composition C was produced, and the coating film elongation at low temperature, the extensibility, and the coating film hardness were measured. The measurement results are shown in Table 2 or Table 3. An aqueous coating composition D was prepared separately, and a blister evaluation was performed. The results are shown in Table 2 and Table 3.

[Table 2]

| | | | Unit | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|---|---|
| Polyisocyanate Curing Agent | | | - | B-1 | B-2 | B-3 | B-4 | B-5 | B-6 | B-7 | B-8 | B-9 | B-10 |
| Composition | Polyisocyanate Raw Material | Type | | A-1 | A-2 | A-3 | A-4 | A-1 | A-2 | A-6 | A-8 | A-7 | A-7 |
| | | Amount | g | 100 | 100 | 100 | 100 | 100 | 100 | 50 | 100 | 100 | 100 |
| | Polyalkylene glycol alkyl ether | Type | | TN555 | MPG081 | MPG | TN555 | MPG | TN555 | TN555 | TN555 | MPG | TN555 |
| | | Amount | g | 17.9 | 15.2 | 3.9 | 15.1 | 12.1 | 14.1 | 8.3 | 12.3 | 30.0 | 15.0 |
| | | Number of Polyalkylene Glycol (n) | - | 9 | 15 | 4.2 | 9 | 4.2 | 9 | 9 | 9 | 4.2 | 9 |
| | Other Components | Type | | - | - | - | - | - | - | B-6 | - | - | - |
| | | Amount | g | - | - | - | - | - | - | 153.6 | - | - | - |
| Physical Property | Isocyanate Group Content | | % | 8.4 | 7.2 | 6.5 | 7.3 | 8.4 | 6.9 | 10.0 | 6.1 | 6.8 | 11.5 |
| | Viscosity | | mPa·s | 5,800 | 6,000 | 12,000 | 2,300 | 6,200 | 6,000 | 5,200 | 14,000 | 5,500 | 9,000 |
| | Nurate/Urethane | | - | 0 | 0 | 0 | 0 | 0 | 0 | 0.36 | 0 | 0 | 0 |
| | Ether/Ester | | - | 0.28 | 0.13 | 0.14 | 0.18 | 0.27 | 0.2 | 0.31 | 0.05 | 0.88 | 0.12 |
| | Water Dispersibility | | - | ◎ | ○ | ○ | ◎ | ◎ | ◎ | ○ | ○ | ◎ | ○ |
| Physical Property of Coating Film | Elongation at Low Temperature | | - | ○ | ◎ | ◎ | ◎ | ◎ | ◎ | △ | ◎ | ○ | △ |
| | Extensibility | | - | ○ | ○ | ○ | ◎ | ◎ | ◎ | △ | ○ | ○ | △ |
| | Hardness | | - | ○ | ○ | ○ | △ | ○ | ○ | ○ | △ | △ | ○ |
| | Blister | | - | ○ | ◎ | ◎ | ◎ | ○ | ◎ | ○ | ○ | △ | △ |

[Table 3]

| | | | Unit | Ex.11 | Ex.12 | Ex.13* | Ex.14 | Ex.15* | Comp. Ex.1 | Comp. Ex. 2 | Comp. Ex.3 | Comp. Ex.4 | Comp. Ex. 5 |
|---|---|---|---|---|---|---|---|---|---|---|---|---|---|
| Polyisocyanate Curing Agent | | | - | B-11 | B-12 | B-13 | B-14 | B-15 | B-16 | B-17 | B-18 | B-19 | B-20 |
| Composition | Polyisocyanate Raw Material | Type | | A-7 | A-6/A-7 | A-6/A-7 | A-6/A-7 | A-6/A-7 | A-6 | A-5 | A-1 | A-8 | A-6/A-7 |
| | | Amount | g | 100 | 50/50 | 80/20 | 60/40 | 75/25 | 100 | 100 | 100 | 100 | 85/15 |
| | Polyalkyleneglycol alkyl ether | Type | | MPG | MPG | MPG | MPG | MPG | TN555 | MPG | - | TN555 | MPG |
| | | Amount | g | 40.0 | 12.5 | 9.0 | 42.0 | 40.3 | 16.6 | 3.3 | - | 8.2 | 30.0 |
| | | Number of Polyalkylene Glycol (n) | - | 4.2 | 4.2 | 4.2 | 4.2 | 4.2 | 9 | 4.2 | - | 9 | 4.2 |
| | Other Components | Type | | - | - | - | - | - | - | - | - | - | - |
| | | Amount | g | - | - | - | - | - | - | - | - | - | - |
| Physical Property | Isocyanate Group Content | | % | 5.9 | 14.0 | 17.0 | 7.6 | 8.7 | 17.2 | 3.5 | 11.7 | 6.7 | 11.4 |
| | Viscosity | | mPa·s | 5,300 | 4,300 | 3,400 | 3,800 | 3,200 | 2,800 | 30,000 | 4,800 | 12,500 | 2,800 |
| | Nurate/Urethane | | - | 0 | 0.50 | 1.93 | 0.41 | 0.62 | 6.30 | 0 | 0 | 0 | 1 |
| | Ether/Ester | | - | 1.15 | 0.36 | 0.43 | 1.50 | 2.31 | Not detected | 0.18 | 0 | 0.016 | 2.86 |
| | Water Dispersibility | | - | ◎ | ∘ | ∘ | ◎ | ◎ | ◎ | ◎ | × | × | ◎ |
| Physical Property of Coating Film | Elongation at Low Temperature | | - | ∘ | △ | △× | ∘ | ∘ | × | ◎ | Impossible to evaluate | Impossible to evaluate | ∘ |
| | Extensibility | | - | ∘ | △ | △× | ∘ | △ | × | ∘ | Impossible to evaluate | Impossible to evaluate | × |
| | Hardness | | - | △ | ◎ | ◎ | △× | △× | ◎ | × | Impossible to evaluate | Impossible to evaluate | × |
| | Blister | | - | △× | △× | △× | △× | △× | × | ◎ | Impossible to evaluate | Impossible to evaluate | × |

* for reference, not according to the claims

In Tables 2 and 3, "nurate/urethane" means "molar ratio of isocyanurate group/urethane group".

"Ether/ester" means "molar ratio of urethane group derived from polyalkylene glycol alkyl ether / urethane group derived from polyester polyol".

As shown in the above-described results, the polyisocyanate curing agents of Examples 1 to 15 (Examples 13 and 15 for reference) to which the present invention was applied, and the aqueous coating compositions using the same showed good water dispersibility, and good hardness, elongation at low temperature and extensibility, and also good blister suitability. The polyisocyanate curing agents of Comparative Examples 1 to 5 to which the present invention was not applied and the aqueous coating compositions using the same did not satisfy any of the water dispersibility, hardness, elongation at low temperature, extensibility, and blister suitability.

## Claims

1. A polyisocyanate curing agent, comprising

   a structural unit derived from at least one diisocyanate selected from the group consisting of an aliphatic diisocyanate and an alicyclic diisocyanate,
   a structural unit derived from a polyester polyol, and
   a structural unit derived from the following general formula (1), wherein
   a content of the isocyanate group is 5.0 to 20.0% by mass,
   a molar ratio between an isocyanurate group and a urethane group (mole number of isocyanurate group / mole number of urethane groups) is 0.5 or less, and
   a molar ratio between a urethane group derived from a polyalkylene glycol alkyl ether and a urethane group derived from the polyester polyol (mole number of urethane groups derived from polyalkylene glycol alkyl ether / mole number of urethane groups derived from polyester polyol) is 0.03 to 2.5,

   $$HO\left(R_1O\right)_n R_2 \qquad (1)$$

   in formula (1), $R_1$ is an alkylene group having 1 to 4 carbon atoms, $R_2$ is an alkyl group having 1 to 4 carbon atoms, and an average number of n is 4.0 to 20.0.

2. An aqueous coating composition comprising the polyisocyanate curing agent defined in claim 1, and an aqueous polyol.

3. A coating film which is obtained by curing the aqueous coating composition defined in claim 2.

4. A coated article comprising the coating film defined in claim 3.

## Patentansprüche

1. Polyisocyanat-Härtungsmittel, umfassend:

   eine Struktureinheit, die von mindestens einem Diisocyanat abgeleitet ist, das aus der Gruppe ausgewählt ist, die aus einem aliphatischen Diisocyanat und einem alicyclischen Diisocyanat besteht,
   eine Struktureinheit, die von einem Polyesterpolyol abgeleitet ist, und
   eine Struktureinheit, die von der folgenden allgemeinen Formel (1) abgeleitet ist, wobei
   der Isocyanatgruppengehalt 5,0 bis 20,0 Massen-% beträgt,
   das molare Verhältnis zwischen einer Isocyanuratgruppe und einer Urethangruppe (Molzahl Isocyanuratgruppen/Molzahl der Urethangruppen) 0,5 oder weniger beträgt und
   das Molverhältnis zwischen einer von einem Polyalkylenglykolalkylether abgeleiteten Urethangruppe und einer von dem Polyesterpolyol abgeleiteten Urethangruppe (Molzahl der vom Polyalkylenglykolalkylether abgeleiteten Urethangruppen / Molzahl der vom Polyesterpolyol abgeleiteten Urethangruppen) 0,03 bis 2,5 ist,

$$HO\left(R_1O\right)_n R_2 \qquad (1)$$

wobei in der Formel (1) $R_1$ eine Alkylengruppe mit 1 bis 4 Kohlenstoffatomen ist, $R_2$ eine Alkylgruppe mit 1 bis 4 Kohlenstoffatomen ist, und die durchschnittliche Anzahl von n ist 4,0 bis 20,0.

**2.** Wässrige Beschichtungszusammensetzung, welche das in Anspruch 1 definierte Polyisocyanat-Härtungsmittel und ein wässriges Polyol enthält.

**3.** Beschichtungsfilm, welcher durch Härten der wässrigen Beschichtungszusammensetzung nach Anspruch 2 erhalten wird.

**4.** Beschichteter Gegenstand, welcher den in Anspruch 3 definierten Beschichtungsfilm enthält.

## Revendications

**1.** Agent de durcissement au polyisocyanate, comprenant

un motif structural dérivé d'au moins un diisocyanate choisi dans le groupe constitué d'un diisocyanate aliphatique et d'un diisocyanate alicyclique,
un motif structural dérivé d'un polyester polyol, et
un motif structural dérivé de la formule générale (1) suivante, dans lequel
une teneur du groupe isocyanate est de 5,0 à 20,0 % en masse,
un rapport molaire entre un groupe isocyanurate et un groupe uréthane (nombre de moles de groupe isocyanurate / nombre de moles de groupes uréthane) est de 0,5 ou moins, et
un rapport molaire entre un groupe uréthane dérivé d'un éther alkylique de polyalkylène glycol et un groupe uréthane dérivé du polyester polyol (nombre de moles de groupes uréthane dérivés d'éther alkylique de polyalkylène glycol / nombre de moles de groupes uréthane dérivés de polyester polyol) est de 0,03 à 2,5,

$$HO\left(R_1O\right)_n R_2 \qquad (1)$$

dans la formule (1), $R_1$ est un groupe alkylène comportant de 1 à 4 atomes de carbone, $R_2$ est un groupe alkyle comportant de 1 à 4 atomes de carbone, et un nombre moyen de n est de 4,0 à 20,0.

**2.** Composition aqueuse de revêtement comprenant l'agent de durcissement au polyisocyanate selon la revendication 1, et un polyol aqueux.

**3.** Film de revêtement qui est obtenu par durcissement de la composition aqueuse de revêtement selon la revendication 2.

**4.** Article revêtu comprenant le film de revêtement selon la revendication 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05222150 A
- JP S6112759 A
- WO 2016125769 A1
- US 20090264587 A1
- US 20110306724 A1